# EUROPEAN PATENT SPECIFICATION

(11) **EP 1 227 619 B1**
(45) Date of publication and mention of the grant of the patent: **03.05.2006**
(21) Application number: 01440019.6
(22) Date of filing: 30.01.2001
(51) Int. Cl.: H04L 12/28

(54) **Method and event management system for providing an apparent connectivity in an access network**
Verfahren und Fallmanagementsystem für das zur Verfügungstellen einer offensichtlichen Verbindung in einem Zugangsnetz
Méthode et système de gestion d'évènement pour fournir une connectivité apparente dans un réseau d'accès

(43) Date of publication of application: 31.07.2002
(73) Proprietor: ALCATEL, 75008 Paris (FR)
(72) Inventor: Chantrain, Dominique, 2650 Edegem (BE); Handekyn, Koen, B-900 Gent (BE); Marly, Nick, B-900 Gent (BE)
(74) Representative: Urlichs, Stefan

(56) References cited:
- EP-A- 0 818 908
- WO-A-00/00904
- WO-A-00/62158

## Description

The present invention relates to data communication networks and more particularly to communication with hosts connected to the core network over an access network.

The framework of this invention concerns the way individuals and companies are given access to interconnected data communication networks. Interconnected data communication networks consist for example in the public Internet and in a plurality of virtual private networks (VPN) operated by third parties. These third party VPNs may be corporate intranets to which external access is severely controlled, for example, by firewalls. Access to such interconnected data communication networks is usually provided to individuals or small and medium enterprises by an access service provider owning a Network Access Server (NAS).

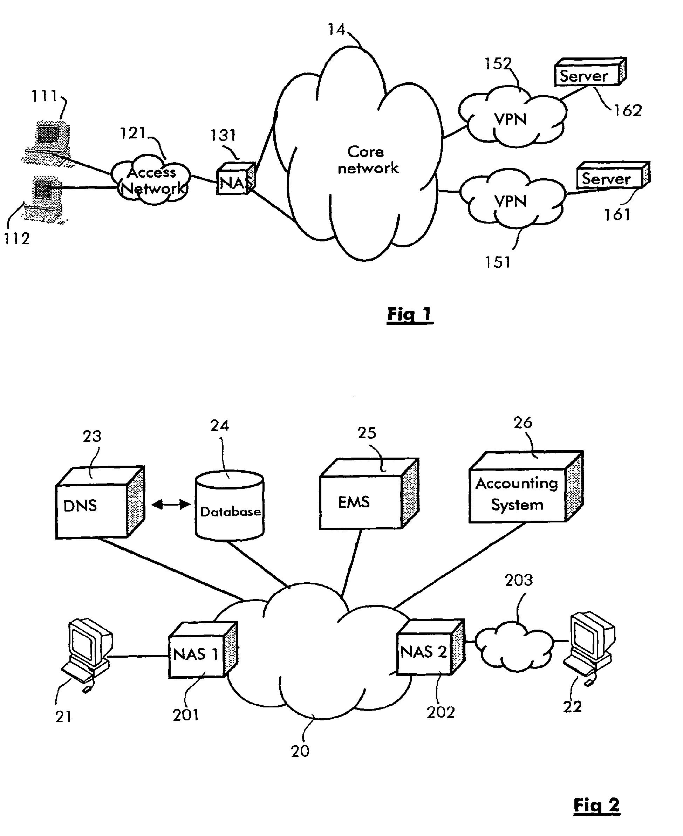

Figure 1 represents a network configuration for enabling individuals to access over an access network to interconnected data communication networks. End-users 111, 112 are connected over access networks 121 to Network Access Server 131. Network Access Server 131 enables the access of end-users 111, 112 to the core network 14 and to the interconnected data communication networks 151, ..., 152. Some hosts 161, ..., 162 belonging to the interconnected data communication networks 151, ..., 152 are represented on the figure by way of example. These hosts may be server or users as end-users 111, 112.

Interconnected data communication network 151 may be associated to Network Access Server 131 and as a consequence play a privileged role for users 111, 112 in that Network Access Server 131 as well as data communication network 151 are owned by a single access service provider. Several value-added services, may be proposed by the access service provider to the end users, such are e-mail, web-browsing, web-page hosting and so on.

Access network 121 may be usual telephone networks like PSTN (Public Switched Telephone Network) or ISDN (Integrated Services Digital Network). It may also be dedicated access networks as cable networks supporting ADSL (Asymmetric Digital Subscriber Line) as well as radio access networks like LMDS (Local Multipoint Distribution Services)

If access networks 121 is usual telephone networks, Network Access Server 131 comprises analog modems to terminate PSTN analog connections. In case of an ISDN digital connection, the signal needs not to be demodulated. Network Access Server 131 also comprises a router function and a gateway to the core network 14.

The usual communication establishment protocol is described below. Host 111 establishes a connection to Network Access Server 131 over the access network 121, Network Access Server 131 opens a session and assign an IP address to the user. Network Access Server 131 releases the session when user 111 closes the connection to Network Access Server 131. As a consequence, when the connection to Network Access Server 131 is released, end-user 111 can no more be informed of events being destined to him. For example, end user 111 is no more alerted on incoming e-mails, or an attempt by another user to access a URL stored on the computer of end-user 111 will fail.

A connect on demand server, ie. A server that remains disconnected from a network until a request is made to access the server is disclosed in the International Patent Application No. WO 00/00904.

An issue is that end-user 111 should keep connected to Network Access Server 131 to be alerted in real time of events destined to him. This proves to be expensive. Moreover, for analog users having usually only one telephone line available, the telephone line is busy during the connection to Network Access Server 131 and cannot be used for usual telephone calls for the duration of the connection.

A solution to cope with this problem is available for ISDN users . In this feature called always-on-ISDN (AODI), the D-channel can be used to maintain a permanent contact between user 111 and Network Access Server 131 without busying the B-channels. The D channel is used as well for its usual signaling task as for the task of transferring user data. The D-channel can trigger the reservation of a B-channel when the amount of user data on the D-channel becomes to important. Usually an e-mail can be exclusively transported on the D-channel, if it does not contain a too large attachment.

However, this solution is not adapted to all kinds of users connected to a Network Access Server for example to analog users or to ASDL users.

The object of the present invention is to provide a method for enabling access from a data communication network to a host connectable to the data communication network over an access network but not always online.

Another object of the invention is to provide a Network Access Server and an event management system to implement such a method.

These objects, and others that appear below, are achieved by a method according to claim 1, a Network Access Server according to claim 7 and an Event Management System according to claim 8.

The method according to the present invention enables a Network Access Server to establish automatically a session toward an end-user when an event concerning this end user has been detected at the Network Access Server. This requires that the Network Access Server knows connection parameters unambiguously identifying the end-user.

An advantage of this method is that it can be implemented independently of the type of access network supporting the connection of the end-user to the Network Access Server. It does not require a modification of the physical connection and can be completely implemented in a software form.

Another advantage of the method according to the present invention is that the access network operator can avoid long lasting but idle connections and hence optimize the use of network resources.

This invention can be used for enabling the access to a content located at the computer of the end-user and referenced as freely accessible in the network even if the computer is not permanently online.

Further advantageous features of the invention are defined in the dependent claims.

Other characteristics and advantages of the invention will appear on reading the following description of a preferred implementation of the method given by way of non-limiting illustrations, and from the accompanying drawings, in which:
- Figure 1 shows a network configuration for enabling individuals to access over an access network to interconnected data communication networks (prior art);
- Figure 2 shows an embodiment of a network environment supporting a method according to the present invention;
- Figure 3 shows messages exchanged between the different entities of the network environment shown on Figure 2;
- Figure 4 shows an embodiment of a Network Access Server according to the present invention;
- Figure 5 shows an embodiment of a EMS according to the present invention.

Figure 1 has already been described in relation with prior art.

Figure 2 shows an embodiment of a network environment supporting a method according to the present invention. The network environment comprises a first user 21, a second user consisting in a web-server 22, a data communication network 20, Network Access Servers 201, 202, an access network 203, a domain name server 23 coupled with a database 24, an event management system (EMS) 25 and an accounting system 26.

Calling user 21 is connected to data communication network 20 over Network Access Server 201. However, this type of connection is not required by the present invention and could be any other type of connection, for example a leased line.

Web server 22, also called semi-permanent user, is able to be connected to data communication network 20 over access network 203 and Network Access Server 202. Network Access Server 202 is located at the interface between access network 202 and data communication network 20.

For sake of simplicity calling user 21 and web server 22 are represented as belonging to the same data communication network 20. However, it will be clear for those skilled in the art that this is not a requirement of the invention and that a network configuration comprising a plurality of interconnected data communication networks could also and even preferably be used in the framework of the present invention. In such a network configuration EMS 25, accounting system 26 and semi-permanent user 22 would preferably be connected to the same data communication network.

In this embodiment, semi-permanent user 22 is a web-server, hosting web pages addressed by means of URL (Universal Resource Locator). Web-server 22 is located in the so-called Customer Premises Domain that means that the contents of the web-server are physically stored at the user computer and not on a disk space at the access provider. Web server 22 is however not permanently connected to access network server 202 contrary to always-on scenario where a connection would be kept permanently alive between web server 22 and Network Access Server 202 by means of the D-channel in ISDN.

It is the purpose of the present invention to guaranty connectivity between the web-server 22 and data communication network 20 on as-needed basis. Indeed, a connection between web server 22 and Network Access Server 202 will be established at the initiative of Network Access Server 202 only when a calling user 21 wants to access to the contents located at web server 22 and the attempt of calling user 21 is detected in Event Management System (EMS) 25.

This invention provides a solution to market segments which up to now had no adequate method for offering online services. An example for users of this service are doctors keeping medical records of patients stored on a server at his office and who give the patients the possibility to check their medical records. Since these checks would possibly be rare and have a short duration, a permanent connection between server 22 and Network Access Server 202 is not necessary and could perhaps be too much subject to hackers. Then, only when a patient willing to check his medical record is identified at EMS 25, a connection between the server 22 and the access network 20 is established at the initiative of Network Access Server 202.

This special application is only given for sake of illustration. Any application requiring the establishment of a connection between a server located at in the Customer Premises Domain and a Network Access Server on an as-needed basis can be implemented by using the method according to the present invention.

Other applications where semi-permanent user 22 is not a server but a usual computer may be envisaged. For example, home working could be simplified by the use of the method according to the present invention. Indeed, the user could be alerted that e-mails, incoming Voice over IP calls or instant messaging services have been identified at EMS 25 as destined to him when semi-permanent user 22 is not currently online. In this situation, semi-permanent user 22 would give the authorization to Network Access Server 202 to automatically establish a connection to him when special events predefined by semi-permanent user 22 himself are detected at EMS 25, which per nature is permanently connected to the data communication network 20.

Web server 22 has to be registered at the Network Access Server 202 for benefiting from the service according to the present invention. This registration can be a permanent subscription or can be proposed automatically to the administrator of server 22 each time a previously established connection between web server 22 and Network Access Server 202 is released.

Indeed, when web server 22 connects at his own initiative, he is automatically registered as being reachable at that place by the Network Access Server. Sufficient connections parameters are a telephone number in case of narrow band Network Access Server or a couple of VP/VC (Virtual Path/Virtual Channel) in case of broadband ATM (Asynchronous Transfer Mode) Network Access Server. When web server 22 closes the session, he indicates that he will remain reachable at this address for some time (e.g. for the rest of the day if he is working at home), and that he would like to be accessible for calling user selecting a URL located on web server 22.

For the purpose of registration, connection parameters of web server 22 must be stored in a database coupled to EMS 25.

An entry of this database contains mandatory parameters: the domain name or URL referencing the web pages located on server 22, an identifier for identifying Network Access Server 202 which should be used for establishing the connection with web server 22, and parameters necessary to establish this connection, e.g. telephone number of the telephone line through which the server is connected to the access network in case the access network is the PSTN or the ISDN or ATM VP/VC for connections via ATM/ADSL, etc...

These connection parameters are preferably stored when server 22 registers on Network Access Server 202.

Other optional parameters may be envisaged. Preferably, the type of events semi-permanent user 22 selects to trigger the automatic establishment of a connection at the initiative of Network Access Server 202 can also be stored in database. Examples for such events are, the reception of e-mails directed to semi-permanent user 22, the reception of a Voice over IP call directed to semi-permanent user 22 at Network Access Server 202, a connection attempt to an URL located on semi-permanent user 22. More complex events can also be envisaged such as e-mail with a certain priority.

The Network Access Server identifier is required as entry of the database when the database is shared among several Network Access Servers for example all belonging to the same access provider.

Network Access Server 202 is extended with a new feature, such that it can take the initiative to startup a session to a server 22 located in the CPE domain, when this is requested by EMS 25. This new features will be described in more details below.

EMS 25 is a system that supervises the occurrence of events selected by the different semi-permanent users having subscribed to a service according to the present invention. A permanent software process is running to check if events are directed to one of the semi-permanent users registered in the database and if these events match the events mentioned by the corresponding semi-permanent user.

Preferably, DNS 23 has additional intelligence to check if the domain name is associated with a semi-permanent user according to the present invention, and to indicate this to EMS 25.

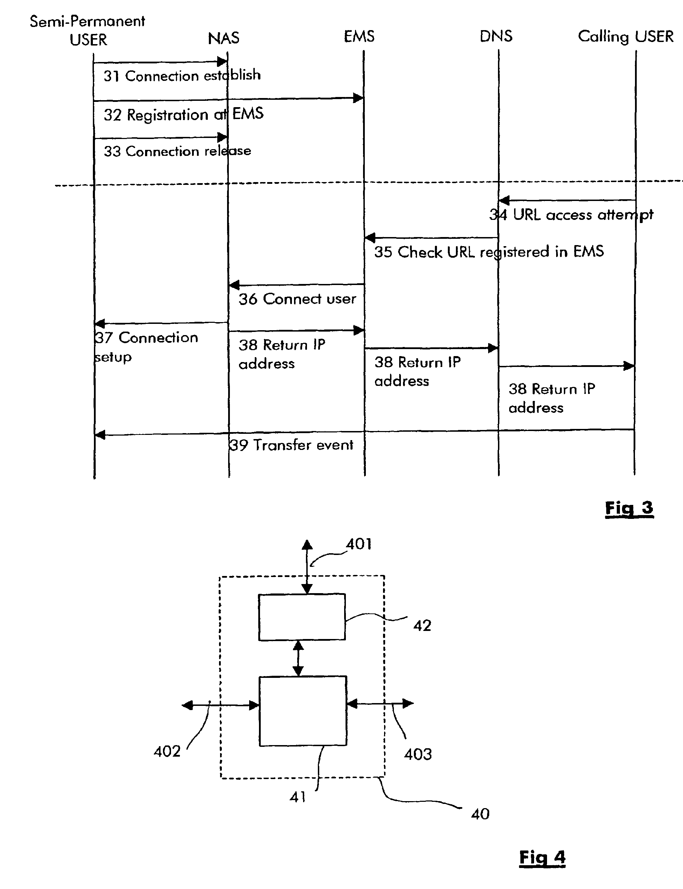

Figure 3 shows messages exchanged between the different entities of the network environment shown on Figure 2.

Steps 31 to 33 show the registration mechanism of semi permanent user at EMS 25. At the occasion of a connection to Network Access Server 202 established at the initiative of semi-permanent user 22 (step 31), the latter connects to EMS 25 (step 32) where it lets store its connection parameters and the type of events he wants to have the method according to the invention applied to. Then semi-permanent user 22 release its connection to Network Access Server 202.

The followings steps show how the occurrence of an event destined to semi-permanent user 22 is treated.

Step 34: Calling user 21 connects to the access provider's network 20. This connection mechanism is not part of the present invention. When the calling user 21 wants to connect to web server 22, he enters a URL in his navigation programs. This URL contains the domain name associated to contents stored on web server 22.

This request is sent to the DNS server in the access provider's domain (2). A usual DNS server would return the IP address of the server. In the framework of the present invention, the server is not permanently connected to the network, the server may not have a permanent IP address registered in the domain name server.

Step 35: In this case, the DNS server 23 identifies this domain name as related to the new type of subscription, and forwards the request to the Event Management System 25. EMS 25 controls the rest of the scenario.

Step 36: EMS 25 checks if the connection to web server 22 is already online. If not, it retrieves the necessary connectivity parameters from the database, and sends a message to Network Access Server 202 to establish the connection.

Step 37: Network Access Server 202 establishes on his own initiative the connection to web server 22, including the allocation of an IP address to web server 22 (typically via PPP).

Step 38: Network Access Server 202 returns the allocated IP address to EMS 25 which forwards the IP address to DNS 23. Finally, the DNS returns the IP address to calling user 21.

Step 39: the connection between calling user 21 and web server 22 is established.

In a preferred embodiment, calling user 21 is billed for this call to web server 22. Calling user is connected to accounting system 26 and asked to enter authentication information. This authentication information could for instance be a calling card number and PIN code in case the accounting system is a calling card system. This authentication step can be advantageously performed between step 35 and step 36. If this authentication step is successful, the method according to the present invention is resumed.

Preferably, EMS 25 activates a "watchdog" in Network Access Server 201, to monitor when calling user 21 disconnects from the web server 22. EMS 25 keeps track of the different watchdogs associated with calling users who may simultaneously be connected to web server 22.

This watchdog in Network Access Server 201 is used to control the call termination as follows:

If calling user 21 terminates his session, the watchdog sends a trigger to EMS 25. EMS 25 stops the accounting for this particular session. Then, it checks if any other users still have a connection to web server 22 open. If not, EMS 25 triggers Network Access Server 202 to terminate the connection with web server 22.

Optionally, if calling user 21 remains connected to Network Access Server 201, but starts browsing to a different URL, the watchdog system in Network Access Server 201 can send to the calling user 21 a notification to ask him if he wants to terminate the connection to web server 22. If so, the watchdog will start the call termination process as before.

If the user chooses to keep the session open, the watchdog may start alternative mechanisms to control session termination (e.g. regularly send a notification to calling user 21 that the session is still open; or download a Java applet to the user terminal through which the user can stop the session at all times, a.s.o....)

If new calling users want to connect to web server 22 while the connection to Network Access Server 202 is already open, the scenario is similar as the one described above, except that the EMS 25 can immediately return the IP address of the server to the further calling users.

Figure 4 shows an implementation of a Network Access Server according to the present invention. The Network Access Server 40 comprises three interfaces : interface 401 to an Event Management System, interface 402 to a data communication network and interface 403 to an access network. Network Access Server 40 comprises an usual Network Access Server module 41 connected to interface 402 and 403 supporting the usual functionality of a Network Access Sever (for example the modems pool, the IP addresses allocation module) and a connection establishment module 42 connected to interface 401 and to usual Network Access Server module 41.

Connection establishment module 42 receives over interface 401 a connection establishment message from an Event management System when the latter has detected an event requiring a connection to be initiated at the initiative of the Network Access Server. The connection establishment message contains connection parameters of a semi permanent user so that the Network Access Server can uniquely identify the semi-permanent user. Furthermore the message can optionally contain an information concerning the type of event that have triggered this automatic connection establishment at the initiative of the Network Access Server.

Upon reception of the connection establishment message, Connection establishment 42 triggers usual Network Access Server module 41 by sending him a message identical to the message usual Network Access Server module 41 would receive from a user requiring a connection to be established. As a consequence, connection establishment module 42 emulates a connection request issued by a calling user. This is possible since all semi-permanent user parameters are available at connection establishment module 42. Then, usual Network Access Server module 41 performs the usual connection establishment steps comprising for example the allocation of an IP address to the semi-permanent user, and the reservation of a modem out of the modem pool if the semi-permanent user is an analog user.

Upon successful establishment of the connection at the initiative of the Network Access Server, usual Network Access Server module 41 returns a message to connection establishment module 42 containing parameters associated to the currently established connection (e.g. IP address). Connection establishment module 42 returns this information to the Event Management Server. After the connection establishment, the session continues as if it were a normal session.

Preferably, connection establishment module 42 takes also care that accounting will not be billed to the semi-permanent user, since the calling user will already be billed for the connection. For this purpose, the connection establishment message issued by the connection establishment module should contain a field indicating that the connection at the initiative of the Network access server should not be billed to semi-permanent user.

The establishment procedure is preferably supported by the commonly used access protocol PPP (Point to Point Protocol). Other access protocols supporting unsolicited messages from the network side to the terminal side could be used.

Protocol such as DHCP not supporting unsolicited messages can also be used under the condition that the access network operator installs a client side application on the semi-permanent user terminal dealing with unsolicited messages. This proprietary solution can be used to realize the session setup.

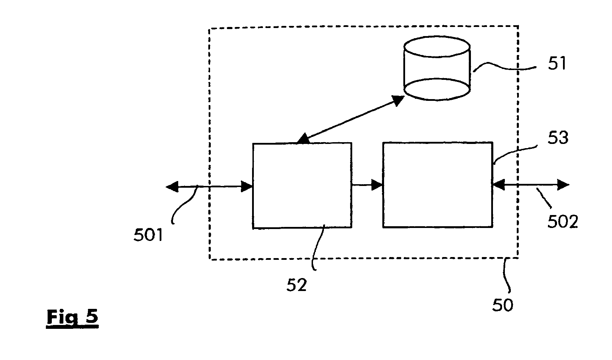

Figure 5 shows an implementation of an Event Management System according to the present invention. Event Management System 50 comprises a database 51, an event detection module 52, a trigger module 53, an interface 501 to a data communication network, and an interface 502 to a Network Access Server.

Event detection module 52 is connected to interface 501 and to triggering module 53. Event detection module 52 preferably supports a permanent running software process that listens to specific events destined to semi-permanent users registered in database 51. Alternatively, event detection module 52 could subscribe to external systems e.g. Mail system or DNS so that these external systems alert event detection module when a particular event occurs. This could be implied thanks to a communication protocol or an API between event detection module and external systems.

When such an event is identified, triggering module 53 transmit over interface 502 to the Network Access Server a message containing the connection parameters of the concerned semi-permanent user.

It is the task of the Network Access Server to take care of establishing the session (e.g. via PPP). Once the session is established, i.e. the user terminal has connectivity to the whole network, the EMS can send the correct notification to the user (e.g. indicating that there are 20 new emails in his mailbox).

## Claims

1. A method for providing connectivity between hosts (21; 22) in a data communication network, at least one of said hosts (22), herein called semi-permanent user, being able to be connected to a Network Access Server (202) over an access network (203), said method comprising the step of:
- establishing a connection to said semi-permanent user on demand,
- storing connection parameters of said semi-permanent user (22) in a database (501) accessible by said Network Access Server (202), said connection parameters identifying unambiguously said semi-permanent user (22) in said access network (203),
- **characterized in that** said semi-permanent user is a usual computer comprising a communication application like e-mail, Voice over IP, or instant messaging services, and **in that** said method further comprises the steps of scanning the occurrence of events directed to said semi-permanent user (22) at an Event Management System (25) when said semi-permanent user (22) is not connected to said Network Access Server (202);
- upon occurrence of one of said events for the communication application, triggering said Network Access Server (202) by said Event Management System (25) to establish a connection to said semi-permanent user (22) by using said connection parameters and alerting said semi-permanent user (22) of said event.

2. Method according to claim 1, **characterized in that** it further comprises the step of
- storing in said database (51) in association with said connection parameters a list of events authorized by said semi-permanent user(22), said step of scanning the occurrence of events being limited to said list of events.

3. Method according to claim 1, **characterized in that** it further comprises the step of releasing said connection at the initiative of said Network Access Server.

4. Method according to claim 1, **characterized in that** it further comprises a step of billing said connection at an accounting system (26).

5. Method according to claim 1, **characterized in that** said data communication network is the Internet, said semi-permanent user comprising a web-server hosting contents addressed by an Universal Resource Locator, a connection being established by Network Access Server between said Network Access Server and said semi-permanent user when a host connected to the Internet wants to access said Universal Resource Locator.

6. Method according to claim 1, **characterized in that** said event directed to said semi-permanent user is the reception of an e-mail or an incoming Voice over IP call.

7. Network Access Server adapted for enabling hosts of an access network to access data to a data communication network, said Network Access Server comprising a connection establishment module adapted to establish a connection on demand to one of said hosts, the Network Access Server comprising an interface to an Event Management System, **characterized in that** the connection establishment module (42) is adapted to receive from the Event Management System a connection message to one of said hosts, said host being a usual computer, herein called semi-permanent user comprising a network communication application and said module adapted to responsively initiate a connection to said semi-permanent user and alert said semi-permanent user of a detected event, the connection message received from the event management system containing the connection parameters stored in a database that identify unambiguously said semi-permanent user in said access network.

8. Event Management System (25) with on interface to a Network Access Server (202) according to claim 7, comprising
- means for accessing to a database (51) storing connection parameters of hosts of an access network, said connection parameters identifying unambiguously a a computer comprising a communication application like e-mail, Voice over IP, or instant messaging services called semi-permanent user (22) in said access network (203);
- an event detection module (52) for detecting the occurrence of events destined to a host of said access network registered in said database, ;
- a trigger module (53) for triggering said Network Access Server (202) and indicating said connection parameters of said semi-permanent user.

9. Event Management System according to claim 8, **characterized in that** it is part of a Network Access Server according to claim 7.

## Patentansprüche

1. Verfahren zur Bereitstellung von Verbindungsmöglichkeiten zwischen Hosts (21; 22) in einem Datenkommunikationsnetz, wobei mindestens einer der Hosts (22), hier semi-permanenter Benutzer genannt, in der Lage ist, über ein Zugangsnetz (203) mit einem Netzwerk-Zugangs-Server (202) verbunden zu werden, wobei das Verfahren folgenden Schritt umfasst:
- Auf Anforderung Aufbau einer Verbindung zu dem semi-permanenten Benutzer,
- Speichern von Verbindungs-Parametern des semi-permanenten Benutzers (22) in einer Datenbank (501), auf die der Netzwerk-Zugangs-Server (202) zugreifen kann, wobei die Verbindungs-Parameter eindeutig den semi-permanenten Benutzer (22) in dem Zugangsnetz (203) kennzeichnen,
- **dadurch gekennzeichnet, dass** der semi-permanente Benutzer ein üblicher Computer ist, der eine Kommunikations-Anwendung, wie Email, Voice over IP oder Instant-Messaging-Dienste enthält, und dadurch, dass das Verfahren weiterhin die Schritte des Abtastens des Auftretens von Ereignissen, die an den semi-permanenten Benutzer (22) gerichtet sind, in einem Ereignis-Management-System (25) umfasst, wenn der semi-permanente Benutzer (22) nicht mit dem Netzwerk-Zugangs-Server (202) verbunden ist;
- Bei Auftreten eines der Ereignisse für die Kommunikations-Anwendung, Triggern des Netzwerk-Zugangs-Servers (202) durch das Ereignis-Management-System (25), um eine Verbindung zu dem semi-permanenten Benutzer (22) unter Verwendung der Verbindungs-Parameter aufzubauen und den semi-permanenten Benutzer (22) von dem Ereignis zu benachrichtigen.

2. Verfahren nach Anspruch 1, **dadurch gekennzeichnet, dass** es weiterhin den folgenden Schritt umfasst:
- Speichern in der Datenbank (51) in Zusammenhang mit den Verbindungs-Parametern einer Liste von Ereignissen, die von dem semi-permanenten Benutzer (22) zugelassen wurden, wobei der Schritt des Abtastens des Auftretens von Ereignissen auf die Liste von Ereignissen beschränkt ist.

3. Verfahren nach Anspruch 1, **dadurch gekennzeichnet, dass** es weiterhin den Schritt des Abbaus der Verbindung auf Initiative des Netzwerk-Zugangs-Servers umfasst.

4. Verfahren nach Anspruch 1, **dadurch gekennzeichnet, dass** es weiterhin einen Schritt der Gebührenerfassung für die Verbindung in einem Rechnungserstellungs-System (26) umfasst.

5. Verfahren nach Anspruch 1, **dadurch gekennzeichnet, dass** das Datenkommunikationsnetz das Internet ist, der semi-permanente Benutzer einen Web-Server enthält, der Inhalt speichert, welcher durch einen Universal Resource Locator adressiert wird, wobei eine Verbindung vom Netzwerk-Zugangs-Server zwischen dem Netzwerk-Zugangs-Server und dem semi-permanenten Benutzer aufgebaut wird, wenn ein mit dem Internet verbundener Host auf den Universal Resource Locator zugreifen will.

6. Verfahren nach Anspruch 1, **dadurch gekennzeichnet, dass** das an den semi-permanenten Benutzer gerichtete Ereignis der Empfang einer Email oder eines eintreffenden Voice over IP Anrufs ist.

7. Netzwerk-Zugangs-Server, der so angepasst ist, dass er es Hosts eines Zugriffsnetzes ermöglicht, auf Daten eines Datenkommunikationsnetzes zuzugreifen, wobei der Netzwerk-Zugangs-Server ein Verbindungsaufbau-Modul enthält, das so angepasst ist, dass es auf Anforderung eine Verbindung zu einem der Hosts aufbaut, wobei der Netzwerk-Zugangs-Server eine Schnittstelle zu einem Ereignis-Management-System enthält, **dadurch gekennzeichnet, dass** das Verbindungsaufbau-Modul (42) so angepasst ist, dass es vom Ereignis-Management-System eine Verbindungs-Nachricht zu einem der Hosts empfängt, wobei der Host ein üblicher Computer ist, hier semi-permanenter Benutzer genannt, der eine Netzwerk-Kommunikations-Anwendung enthält, und dadurch, dass das Modul so angepasst ist, dass es als Reaktion eine Verbindung zu dem semi-permanenten Benutzer auslöst und den semi-permanenten Benutzer über ein erkanntes Ereignis benachrichtigt, wobei die vom Ereignis-Management-System empfangene Verbindungs-Nachricht die Verbindungs-Parameter enthält, die in einer Datenbank gespeichert sind und den semi-permanenten Benutzer in dem Zugangsnetz eindeutig kennzeichnen.

8. Ereignis-Management-System (25) mit einer Schnittstelle zu einem Netzwerk-Zugangs-Server (202) gemäß Anspruch 7, der folgendes umfasst:
- Mittel zum Zugriff auf eine Datenbank (51), in der Verbindungs-Parameter von Hosts eines Zugangsnetzes gespeichert sind, wobei die Verbindungs-Parameter einen Computer, der eine Kommunikations-Anwendung enthält, wie Email, Voice over IP oder Instant-Messaging-Dienste, und der semi-permanenter Benutzer (22) genannt wird, in dem Zugangsnetz (203) eindeutig kennzeichnen;
- Ein Ereignis-Erkennungs-Modul (52) zur Erkennung des Auftretens von Ereignissen, die an einen Host des Zugangsnetzes gerichtet sind, der in der Datenbank registriert ist;
- Ein Trigger-Modul (53) zur Triggerung des Netzwerk-Zugangs-Servers (202) und Anzeige der Verbindungs-Parameter des semi-permanenten Benutzers.

9. Ereignis-Management-System nach Anspruch 8, **dadurch gekennzeichnet, dass** es Teil eines Netzwerk-Zugangs-Servers nach Anspruch 7 ist.

## Revendications

1. Procédé pour fournir une connectivité entre des hôtes (21 ; 22) dans un réseau de communication de données, au moins un desdits hôtes (22), appelé ici utilisateur semi-permanent, pouvant être connecté à un serveur d'accès au réseau (202) sur un réseau d'accès (203), ledit procédé comprenant les étapes de :
- établir une connexion audit utilisateur semi-permanent à la demande,
- stocker des paramètres de connexion dudit utilisateur semi-permanent (22) dans une base de données (501) accessible par ledit serveur d'accès au réseau (202), lesdits paramètres de connexion identifiant sans ambiguïté ledit utilisateur semi-permanent (22) dans ledit réseau d'accès (203),
- **caractérisé en ce que** ledit utilisateur semi-permanent est un ordinateur usuel comprenant une application de communication comme le courrier électronique, Voix sur IP, ou des services de messagerie instantanée, et **en ce que** ledit procédé comprend en outre les étapes consistant à analyser l'occurrence d'événements dirigés vers ledit utilisateur semi-permanent (22) au niveau d'un système de gestion d'événements (25) lorsque ledit utilisateur semi-permanent (22) n'est pas connecté audit serveur d'accès au réseau (202) ;
- lors de l'occurrence d'un desdits événements pour l'application de communication, déclencher ledit serveur d'accès au réseau (202) par ledit système de gestion d'événements (25) pour établir une connexion audit utilisateur semi-permanent (22) en utilisant lesdits paramètres de connexion et alerter ledit utilisateur semi-permanent (22) dudit événement.

2. Procédé selon la revendication 1, **caractérisé en ce qu'**il comprend en outre l'étape de
- stocker dans ladite base de données (51) en association avec lesdits paramètres de connexion une liste d'événements autorisés par ledit utilisateur semi-permanent (22), ladite étape consistant à balayer l'occurrence d'événements étant limitée à ladite liste d'événements.

3. Procédé selon la revendication 1, **caractérisé en ce qu'**il comprend en outre l'étape consistant à libérer ladite connexion à l'initiative dudit serveur d'accès au réseau.

4. Procédé selon la revendication 1, **caractérisé en ce qu'**il comprend en outre une étape consistant à facturer ladite connexion au niveau d'un système de comptabilité (26).

5. Procédé selon la revendication 1, **caractérisé en ce que** ledit réseau de communication de données est Internet, ledit utilisateur semi-permanent comprenant un serveur web hébergeant des contenus adressés par un localisateur de ressources universel, une connexion étant établie par le serveur d'accès au réseau entre ledit serveur d'accès au réseau et ledit utilisateur semi-permanent lorsqu'un hôte connecté à Internet veut accéder audit localisateur de ressources universel.

6. Procédé selon la revendication 1, **caractérisé en ce que** ledit événement dirigé vers ledit utilisateur semi-permanent est la réception d'un courrier électronique ou un appel Voix sur IP entrant.

7. Serveur d'accès au réseau adapté pour permettre à des hôtes d'un réseau d'accès d'accéder à des données dans un réseau de communication de données, ledit serveur d'accès au réseau comprenant un module d'établissement de connexion adapté pour établir une connexion à la demande à un desdits hôtes, le serveur d'accès au réseau comprenant une interface à un système de gestion d'événements, **caractérisé en ce que** le module d'établissement de connexion (42) est adapté pour recevoir du système de gestion d'événements un message de connexion à un desdits hôtes, ledit hôte étant un ordinateur usuel, appelé ici utilisateur semi-permanent, comprenant une application de communication de réseau et ledit module étant adapté pour initier en réponse une connexion audit utilisateur semi-permanent et alerter ledit utilisateur semi-permanent d'un événement détecté, le message de connexion reçu du système de gestion d'événements contenant les paramètres de connexion stockés dans une base de données qui identifient sans ambiguïté ledit utilisateur semi-permanent dans ledit réseau d'accès.

8. Système de gestion d'événements (25) avec une interface à un serveur d'accès au réseau (202) selon la revendication 7, comprenant :
- un moyen pour accéder à une base de données (51) stockant des paramètres de connexion d'hôtes d'un réseau d'accès, lesdits paramètres de connexion identifiant sans ambiguïté un ordinateur comprenant une application de communication comme le courrier électronique, Voix sur IP, ou des services de messagerie instantanée, appelé utilisateur semi-permanent (22) dans ledit réseau d'accès (203) ;
- un module de détection d'événements (52) pour détecter l'occurrence d'événements destinés à un hôte dudit réseau d'accès enregistré dans ladite base de données ;
- un module déclencheur (53) pour déclencher ledit serveur d'accès au réseau (202) et indiquer lesdits paramètres de connexion dudit utilisateur semi-permanent.

9. Système de gestion d'événements selon la revendication 8, **caractérisé en ce qu'**il fait partie d'un serveur d'accès au réseau selon la revendication 7.
